Europäisches Patentamt

**European Patent Office**

**Office européen des brevets**

(19)

(11) Publication number: **0 389 927**
**A2**

(12) # EUROPEAN PATENT APPLICATION

(21) Application number: **90105233.2**

(51) Int. Cl.5: **C08G 59/68, C08G 59/24**

(22) Date of filing: **20.03.90**

(30) Priority: **30.03.89 US 331219**

(43) Date of publication of application:
**03.10.90 Bulletin 90/40**

(84) Designated Contracting States:
**BE DE ES FR GB IT NL SE**

(71) Applicant: **GENERAL ELECTRIC COMPANY**
**1 River Road**
**Schenectady, NY 12345(US)**

(72) Inventor: **Eckberg, Richard Paul**
**10 Fifth Avenue**
**Saratoga Springs, New York 12866(US)**
Inventor: **Riding, Karen Dorothy**
**21 Bellwood Way**
**Castleton, New York 12033(US)**

(74) Representative: **Schüler, Horst, Dr. et al**
**Kaiserstrasse 69**
**D-6000 Frankfurt/Main 1(DE)**

(54) **Epoxysiloxane cure promoters and accelerators for cationic UV cure systems.**

(57) Photopolymerizable coating compositions are described which comprise an organic cycloaliphatic polyepoxide in admixture with a cure accelerating amount of a low molecular weight alpha, omega-cycloaliphatic epoxyfunctional siloxane which, when photocured using an onium salt photoinitiator, require less energy to cure, and thus coatings utilizing these compositions may be cured more rapidly under the same conditions than can compositions containing only the organic cycloaliphatic polyepoxide.

EP 0 389 927 A2

## EPOXYSILOXANE CURE PROMOTERS AND ACCELERATORS FOR CATIONIC UV CURE SYSTEMS

This invention relates to photopolymerizable coating compositions. More particularly, this invention relates to coating compositions which comprise mixtures of organic cycloaliphaticpolyepoxides with certain cycloaliphatic epoxy-functional siloxanes. The compositions further comprise an onium salt as a photoinitiator and can be cured by exposure to actinic light or electron beam irradiation to form coatings.

## BACKGROUND OF THE INVENTION

Polymeric cycloaliphatic epoxy-functional silicones and their ultraviolet (UV) radiation cure to specialized release coatings using onium catalysts have been described in U.S. Pat. Nos. 4,279,717; 4,421,904; (Eckberg et al) and 4,576,999 (Eckberg) inter alia. Low molecular weight alpha, omega-cycloaliphatic epoxy-functional tetramethyldisiloxanes are also known and have been described by Plueddemann and Fanger, J. Amer. Chem. Soc., 81, 2632-5 (1959). The use of onium salt catalysts for photopolymerization of the Plueddemann et al. compounds is suggested in U.S. Pat. Nos. 4,026,705 (Crivello et al.), 4,138,255 (Crivello) inter alia. The use of small amounts of monofunctional or polyfunctional epoxies to modify the release properties of UV-curable release coatings prepared from "pre-crosslinked" photopolymerizable epoxyfunctional silicones is described in U.S. Pat. Nos. 4,576,999 (Eckberg, monoepoxides) and 4,547,431 (Eckberg, polyepoxides).

Photopolymerizable compositions comprising organic cycloaliphatic polyepoxides and photosensitizers have been known for some time and have enjoyed considerable success in the marketplace. These compositions have had the drawback that the energy required to cure coatings using such compositions is rather high, which leads to a cure rates which are slower than desired and problems in applications requiring rapid throughput or line speeds. Polyvinyl ethers have been described as UV-cure accelerators for sluggish cycloaliphatic epoxy based systems (J.A. Dougherty and F.J. Vara, Radtech '88-North America Proceedings, pp. 372-77), but such materials are not readily available, and have not seen significant use. Thus there exists a need for radiation-curable cycloaliphatic polyepoxide-based coatings systems which show increased cure speeds and utilize readily available intermediates.

## SUMMARY OF THE INVENTION

It has been discovered that low molecular weight linear alpha, omega-di(cycloaliphatic epoxy)-polysiloxanes catalyzed with onium salt photoinitiators require less energy to cure than organic cycloaliphatic polyepoxides. It was unexpected to find that when compositions which comprise an organic cycloaliphatic polyepoxide mixed with a cure accelerating amount of such linear low molecular weight alpha, omega-cycloaliphatic epoxy functional siloxanes are photocured using an onium salt photoinitiator, less energy is required to cure the compositions than in the absence of the cycloaliphatic epoxy-functional siloxane. Thus coatings utilizing these compositions may be cured more rapidly under the same conditions than can compositions containing only the organic cycloaliphatic polyepoxide.

Accordingly, it is an object of this invention to provide cycloaliphatic polyepoxide coating compositions which exhibit an improved photocure rate using onium photocure catalysts.

It a further object of the invention to provide organic cycloaliphatic polyepoxide coating compositions which comprise alpha, omega-cycloaliphatic epoxy-functional siloxane UV cure accelerators.

These and other objects of the invention are accomplished by using a cycloaliphatic epoxy-functional siloxane having the nominal formula

$R'R_2 SiO(R_2 SiO)_x SiR_2 R'$

where each R individually is a lower alkyl radical having from 1 to 8 carbon atoms, each R' individually is a monovalent cycloaliphatic epoxy-functional organic radical having from 2 to 20 carbon atoms, and x has a value from zero to about 16, as an ultraviolet cure accelerator for an organic cycloaliphatic polyepoxide in the presence of an onium photopolymerization catalyst.

## DETAILED DESCRIPTION OF THE INVENTION

The cycloaliphatic epoxy-functional siloxanes used as cure accelerators in the compositions of the present invention are obtained when the hydrogen atoms of a 1,1,3,3-tetralkyldisiloxane or a higher alpha, omega-dihydro-polysiloxane homolog having the nominal formula

$$HR_2SiO(R_2SiO)_xSiR_2H$$

where each R individually is a lower alkyl radical having from 1 to 8 carbon atoms and x has a value from 0 to about 16 are reacted in a hydrosilation addition reaction with an organic molecule which contains both ethylenic unsaturation and cycloaliphatic epoxide functionality. Ethylenically unsaturated cycloaliphatic epoxy compounds having from 2 to 20 carbon atoms, preferably where the unsaturation is a vinyl or allyl group, are added to an alpha, omega-dihydropolydialkylsiloxane in the presence of catalytic amounts of platinum to form an organofunctional siloxane having the nominal formula

$$R'R_2SiO(R_2SiO)_xSiR_2R'$$

where R and x have the meanings given above, and R' is a monovalent cycloaliphatic epoxy-functional organic radical having from 2 to 20 carbon atoms. Preferably R is methyl, and x preferably has a value less than 10. The preferred vinyl- or allyl-functional cycloaliphatic epoxide may be a compound such as 4-vinylcyclohexeneoxide, vinylnorbornenemonoxide, limonene monoxide, dicyclopentadienemonoxide, or the like. For preparing cycloaliphatic epoxyfunctional siloxanes, 4-vinylcyclohexeneoxide is preferred. When higher siloxane homologs are desired, it may be convenient to prepare the 1,3-diepoxyfunctional disiloxane and then introduce the desired number of dialkylsiloxy groups by equilibration with an appropriate quantity of a cyclic diorganosiloxane such as octamethylcyclotetrasiloxane, using a catalyst such as tetramethylammonium hydroxide as is well-known to the art. In general it is preferred that the alkyl groups of the siloxane be methyl.

When organic cycloaliphatic polyepoxides are mixed with cure accelerating cycloaliphatic epoxy-functional siloxanes and then photocured using an onium catalyst, the cycloaliphatic epoxy-functional siloxanes act as cure accelerators, affording a significant reduction in the amount of energy required to cure the composition, thus allowing significant energy savings and/or increases in cure speed as compared to the unmodified organic polyepoxide composition.

There are a host of commercially available cycloaliphatic epoxy-containing materials which can be used in this invention. In particular, epoxides which are readily available include vinylcyclohexene dioxide (e.g., "ERL-4206" from Union Carbide Corp.), 3,4-epoxycyclohexylmethyl-3,4-epoxycyclohexane carboxylate (e.g., "ERL-4221" from Union Carbide Corp.), 3,4-epoxy-6-methylcyclohexylmethyl 3,4-epoxy-6-methylcyclohexane carboxylate (e.g., "ERL-4201" from Union Carbide Corp.) bis(3,4-epoxy-6-methylcyclohexylmethyl) adipate (e.g., "ERL-4289" from Union Carbide Corp.), bis(2,3-epoxycyclopentyl) ether (e.g., "ERL,-0400" from Union Carbide Corp.), dipentene dioxide (e.g., "ERL-4269" from Union Carbide Corp.). For a more detailed list of useful epoxides of this nature, reference is made to the U.S. Pat. No. 3,117,099, incorporated herein by reference.

Combinations of cure accelerating amounts of cycloaliphatic epoxy-functional siloxanes with organic cycloaliphatic polyepoxides useful in the present invention should be compatible (miscible). Not every combination of a cycloaliphatic epoxy-functional siloxane with an organic cycloaliphatic polyepoxide will be compatible, nor will all the possible proportions of a particular miscible combination necessarily be compatible, but simple mixing of materials to determine their miscibility will quickly determine the suitability of a particular combination without undue experimentation. The cycloaliphatic epoxy-functional siloxanes of the invention where x is zero or a small number are usually more compatible with organic cycloaliphatic polyepoxides than those where x is greater than 10 and approaches about 16. At values of x much in excess of about 16, the siloxanes exhibit sufficient typical silicone behavior that they usually will not display sufficient miscibility with organic cycloaliphatic polyepoxides to be useful as cure accelerators. In some cases the addition of a small amount of an alcohol or polyol to the combination of cycloaliphatic epoxy-functional siloxane and organic polyepoxide will effect compatibilization of the mixture without undue effect on the cure rate of the composition in a manner similar to that taught in our copending application (Docket 60Si-1267), filed on even date herewith.

The cycloaliphatic epoxides containing cure accelerating cycloaliphatic epoxy-functional siloxane compositions of the invention are made photocurable by combining them with a catalytic amount of an onium salt photoinitiator. Suitable photoinitiators for cycloaliphatic epoxy-functional siloxane compositions are the onium salts having the formuleae:

$$R_2I^+ MX_n^-$$
$$R_1S^+ MX_n^-$$
$$R_1Se^+ MX_n^-$$

$R_3S + MX_n^-$

$R_3Se + MX_n^-$

$R_4P + MX_n^-$

$R_4N + MX_n^-$

where radicals represented by R can be the same or different organic radicals having from 1 to 30 carbon atoms, including aromatic carbocyclic radicals of from 6 to 20 carbon atoms which can be substituted with from 1 to 4 monovalent radicals selected from $C_{(1-8)}$ alkoxy, $C_{(1-8)}$ alkyl, nitro, chloro, bromo, cyano, carboxy, mercapto, etc. and also including aromatic heterocyclic radicals including, e.g. pyridyl, thiophenyl, pyranyl, etc.; and $Mx_n^-$ is a non-basic, non-nucleophilic anion, such as $BF_4^-$, $PF_6^-$, $AsF_6^-$, $SbF_6^-$, $SbCl_6^-$, $HSO_4^-$, and the like.

Bis-diaryl iodonium salts, such as (octyloxyphenyl] phenyl-iodonium hexafluoroantimonate bis(dodecyl phenyl-)iodonium hexafluoroarsenate and bis(dodecyl phenyl)iodonium hexafluoroantimonate, are preferred.

The amount of catalyst employed is not critical, so long as proper polymerization is effected. As with any catalyst, it is preferable to use the smallest effective amount possible; for the purposes herein, catalyst levels of from about 0.5%-5% by weight have been found suitable.

If desired, one may include in the photopolymerizable compositions various conventional non-basic fillers (e.g., silica, talc, glass bubbles, clays, powdered metal such as aluminum, zinc oxide, etc.) up to about 50% by volume or more, viscosity modifers, rubbers, tackifying agents, pigments, and so forth.

The photopolymerizable compositions of the invention are particularly suitable in a variety of applications in the fields of protective coatings and graphic arts due to their superior impact resistance and abrasion-resistance and adhesion to rigid, resilient and flexible substrates such as metal, plastic, rubber, glass, paper, wood, and ceramics; their excellent resistance to most solvents and chemicals; and their capability of forming high resolution images. Among such uses are in making acid-and alkali- resist images for chemical milling, gravure images, off-set plates, flexographic printing, screenless lithography, relief printing plates, stencil making, microimages for printed circuitry, microimages for information storage, decorations of paper, glass, and metal surfaces, and light-cured protective coatings. The compositions may also be used to impregnate substrates such as glass cloth and the like to obtain a shelf stable product which is useful in many manufacturing and repairing processes where a thermally curable liquid composition is not convenient to use.

The photopolymerization of the compositions of the invention occurs on exposure of the compositions to any source of radiation emitting actinic radiation at a wavelength within the ultraviolet and visible spectral regions. Suitable sources of radiation include mercury, xenon, carbon arc and tungsten filament lamps, sunlight, etc. Exposures may be from less than about 1 second to 10 minutes or more depending upon the amounts of particular polymerizable materials and aromatic complex salts being utilized and depending upon the irradiation.

In order that persons skilled in the art may better understand the practice of the present invention, the following examples are provided by way of illustration, and not by way of limitation.

EXPERIMENTAL

All ratios expressed in the Examples are by weight.

Cure speed was ascertained by determining the smallest UV radiation dose needed to crosslink 2 mil thick films of photocatalysed coating compositions which were manually coated on polyethylene kraft substrate prior to exposure to medium pressure mercury vapor Hanovia UV lamps mounted in a RPC Model QC1202 AN Lab Processor in ambient atmosphere. UV flux was measured with an International Light photometer equipped with A309 Lightbug accessory. "Cure" is defined as a tack-free, migration-free surface.

Example 1

The cure efficiencies of 1,3-bis(3,4-epoxycyclohexyl-1-ethyl)tetramethyldisiloxane

$R'R_2SiO(R_2SiO)_xSiR_2R'$

where R is methyl, R' is 3,4-epoxycyclohexyl-1-ethyl, and x is zero, and its higher homologs where x is either 4, 10, or 16, were compared with those of limonene dioxide (SCM Organics) and 3, 4-epoxycyclohexylmethyl 3,4-epoxycyclohexylcarboxylate (ERL-4221, Union Carbide Corp.) using 0.5% (4-octyloxyphenyl) phenyliodoniumhexafluoroantimonate as a 50% by weight solution in 2-ethyl-1,3-hexanediol (Catalyst 1). The results are shown in Table 1.

## Example 2

Example 1 was repeated, using a solution of bis(dodecylphenyl) iodoniumhexafluoroantimonate in ethylhexanediol (6% antimony) as the photocatalyst. The results are also shown in Table 1.

Table 1

| Material | UV Dose for cure, mJ/cm$^2$ | |
|---|---|---|
| | Example 1 | Example 2 |
| epoxysiloxane, x = 0 | 15 | 58 |
| epoxysiloxane, x = 4 | 29 | 78 |
| $M^E D_{10} M^E$, x = 10 | 67 | 80 |
| $M^E D_{16} M^E$, x = 16 | (Catalyst Insf. Soluble) | 158 |
| Limonenedioxide | 65 | 160 |
| ERL 4221 | 370 | 2000 |

It is readily apparent that the cycloaliphatic epoxyterminated polydimethylsiloxanes (particularly with x less than or greater than 10) show remarkable and unexpectedly fast, efficient cationic UV cure response in comparison to conventional UV-curable epoxy resins. [The better performance of (4-octyloxyphenyl) phenyliodonium hexafluoroantimonate catalyst versus bis(dodecylphenyl) iodoniumhexafluoroantimonate is incidental to this disclosure, being attributed to its lower molecular weight and broader UV absorption.]

## Example 3

The cure efficiencies of various blends of the epoxyfunctional disiloxane (x = 0) with ERL 4221 were determined using 0.5% Catalyst 1. The results are shown below.

| Composition | UV Dose for Cure mJ/cm$^2$ |
|---|---|
| 100:0 ERL 4221:epoxysiloxane | 370 |
| 90:10 ERL 4221:epoxysiloxane | 235 |
| 75:25 ERL 4221:epoxysiloxane | 116 |
| 50:50 ERL 4221:epoxysiloxane | 60 |
| 25:75 ERL 4221:epoxysiloxane | 20 |
| 0:100 ERL 4221:epoxysiloxane | 15 |

## Example 4

The cure efficiency of blends of the epoxyfunctional hexasiloxane (x = 4) with ERL 4221 were determined using 0.5% Catalyst 1. A 90:10 blend of ERL 4221 with the siloxane required 192 mJ/cm$^2$ for cure, compared to 370 mJ/cm$^2$ for ERL 4221 under the same conditions. A 75:25 mixture was incompatible and separated on standing.

## Example 5

A mixture of ERL 4221, epoxyfunctionalhexasiloxane, and n-octanol in a ratio of 75:20:5 was completely compatible and required a dose of only 120 mJ/cm$^2$ for cure.

It is obvious that modifications and variations in the present invention are possible in light of the foregoing disclosure. It is understood however, that any incidental changes made in the particular embodiments of the invention as disclosed are within the full intended scope of the invention as set forth in the following claims.

## Claims

1. A photopolymerizable cycloaliphatic epoxy coating composition comprising a cure accelerating amount of a cycloaliphatic epoxy-functional siloxane having the nominal formula
$R'R_2SiO(R_2SiO)_xSiR_2R'$
where each R individually is a lower alkyl radical having from 1 to 8 carbon atoms, R' is a monovalent organic cycloaliphatic epoxy-functional radical having from 2 to 20 carbon atoms, and x has a value from 0 to about 16.

2. A photopolymerizable coating composition comprising:
(a) an organic cycloaliphatic polyepoxide;
(b) a cure accelerating quantity of a cycloaliphaticepoxy-functional siloxane having the nominal formula
$R'R_2SiO(R_2SiO)_xSiR_2R'$
where each R individually is a lower alkyl radical having from 1 to 8 carbon atoms, R' is a monovalent organic cycloaliphatic epoxy-functional radical having from 2 to 20 carbon atoms, and x has a value from zero to about 16; and
(c) a catalytic amount of a photocatalyst or a combination of photocatalysts.

3. The composition of claim 2 wherein R is methyl.

4. The composition of claim 2 wherein the photocatalyst is an aromatic iodonium complex salt.

5. The composition of claim 2 wherein the value of x is less than 10.

6. The composition of claim 2 wherein R is methyl and R' is 3,4-epoxycyclohexyl-1-ethyl.

7. The composition of claim 2 wherein R is methyl and the value of x is less than 10.

8. The composition of claim 2 wherein R is methyl and the value of x is zero.